# EUROPEAN PATENT SPECIFICATION

(11) **EP 3 620 577 B1**
(45) Date of publication and mention of the grant of the patent: **23.11.2022**
(21) Application number: 19189433.6
(22) Date of filing: 31.07.2019
(51) Int. Cl.: E01C 23/01, G01C 7/04

(54) **MOBILE MEASURING APPARATUS INCORPORATING A MEASURING DEVICE**
MOBILE MESSVORRICHTUNG MIT EINEM MESSGERÄT
APPAREIL DE MESURE MOBILE INCORPORANT UN DISPOSITIF DE MESURE

(30) Priority: 05.09.2018 JP 2018166363
(43) Date of publication of application: 11.03.2020
(73) Proprietor: Ricoh Company, Ltd., Tokyo 143-8555 (JP)
(72) Inventor: TSURITANI, Shoh, Tokyo, 143-8555 (JP); ITOH, Izumi, Tokyo, 143-8555 (JP)
(74) Representative: J A Kemp LLP

(56) References cited:
- CN-A- 108 330 792
- CN-B- 105 954 191
- US-A1- 2017 204 569

## Description

### BACKGROUND

### Technical Field

The present invention relates to a mobile measuring apparatus incorporating a measuring device.

### Background Art

A mobile measuring apparatus is known that includes a measuring device, such as a distance-measuring device equipped with a camera and a laser, mounted on a mobile object, such as a vehicle and a drone. Such a mobile measuring apparatus is capable of measuring the conditions of the external environment of the own vehicle, such as vehicles around the driver's vehicle, the road conditions, and the tunnel conditions. As an example of the measuring device that measures the conditions of the external environment, a camera is known that includes a wide-angle lens and a plurality of cameras (stereo cameras), and has a configuration that uses a laser device for measurement.

For example, JP-5729164-B (JP-2013-009211-A) discloses an on-vehicle camera attached to the exterior of a vehicle.

However, in the configuration disclosed by JP-5729164-B, when capturing the external environment, the shadows of the measuring device, the frame supporting the measuring device, and the harness connected to the measuring device are reflected in a measurement target due to light from a light source such as the sun, the illumination of a tunnel, and a street light. With the irregular presence of the shadow, the configuration might fail to successfully detect the measurement target.

US 2017/204569 A discloses a mobile pavement surface scanning system mounted on the back of a survey vehicle, comprising stereoscopic image capture devices able to record a sequence of pavement surface images.

CN 108 330 792 A and CN 105 954 191 B disclose background art to the invention.

### SUMMARY

In one aspect of this disclosure, there is provided an improved mobile measuring apparatus as defined by the claims.

The embodiments of the present disclosure provide a mobile measuring apparatus incorporating a measuring device capable of successfully measuring a measurement target.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1A is a side view of a mobile measuring apparatus incorporating a measuring device according to an embodiment of the present disclosure;
FIG. 1B is a perspective view of the mobile measuring apparatus in FIG. 1A seen from the back side;
FIG. 2 is an illustration of a state of measurement of the mobile measuring apparatus;
FIG. 3 is a perspective view of the measuring device according to an embodiment of the present disclosure seen from below;
FIG. 4 is a cross-sectional view of the measuring device according to an embodiment of the present disclosure;
FIG. 5 is an illustration of a shadow caused by the mobile measuring apparatus according to an embodiment of the present disclosure;
FIG. 6 is an illustration of the shadow caused by a mobile measuring apparatus according to a comparative example; and
FIGs. 7A, 7B, and 7C are illustrations for comparing examples of a captured image between the mobile measuring apparatus according to an embodiment of the present disclosure and the mobile measuring apparatus according to the comparative example.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

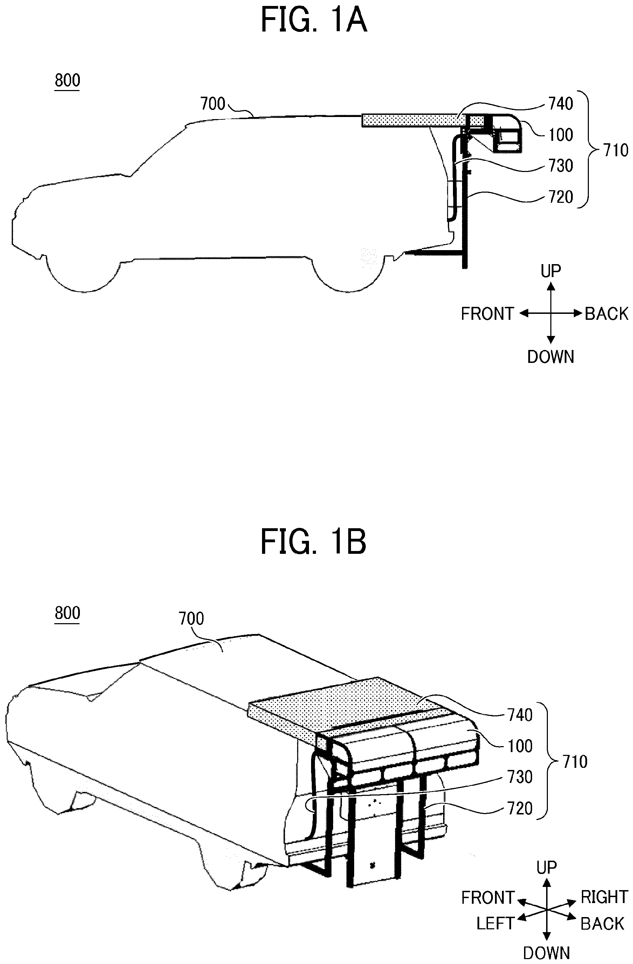

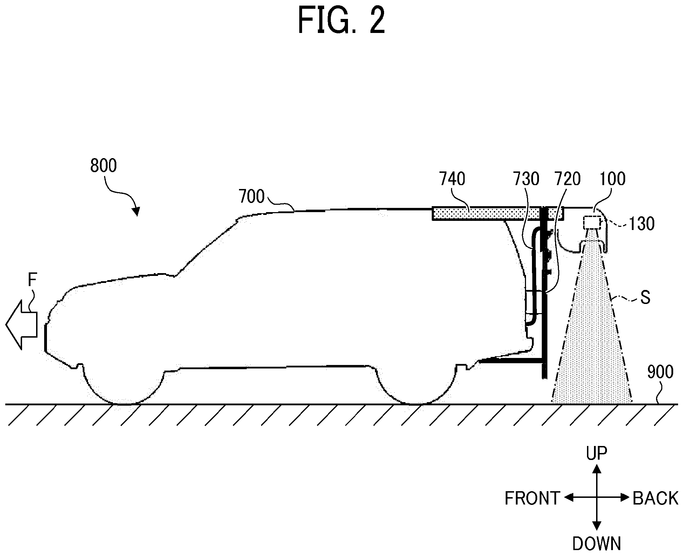

A mobile measuring apparatus 800 equipped with a measuring device body 100 according to an embodiment of the present disclosure is described with reference to FIGs. 1A and 1B, and FIG. 2. FIG. 1A is a side view of the mobile measuring apparatus 800 incorporating the measuring device body 100 according to an embodiment of the present disclosure. FIG. 1B is a perspective view of the mobile measuring apparatus 800 in FIG. 1A seen from the back side. FIG. 2 is an illustration of the measurement state of the mobile measuring apparatus 800. In the following description, the direction of travel of a vehicle 700 is forward (forward direction), the opposite direction of the direction of travel of the vehicle 700 is backward (backward direction). Further, the direction of gravity is downward, and the opposite direction thereof is upward. The right direction is to the right along the horizontal direction relative to the direction of travel of the vehicle 700. The opposite direction thereof is the left direction. These directions are indicated in the figures.

The mobile measuring apparatus 800 include the vehicle (mobile object) 700, and a measuring device 710. The measuring device 710 includes a frame 720 attached to the vehicle 700, a measuring device body 100 attached to the vehicle 700 with the frame 720 therebetween, a harness 730 connected to the measuring device body 100, and a light-shielding cover 740 (light-shielding means) disposed between the vehicle 700 and the measuring device body 100.

In the mobile measuring apparatus 800 in FIGs. 1A and 1B, and 2, the frame 720 is attached to the back side of the vehicle 700, and a stereo camera (image-capturing device) 130 is attached to the measuring device body 100 with the image-capturing area S facing downward. With such a configuration, the mobile measuring apparatus 800 captures an image of a road surface 900 (the measurement target) using the stereo camera 130 attached to the measuring device body 100, while moving forward F. Thus, the unevenness of the road surface 900 to be measured and the road conditions (whether the white line has been disappeared) can be measured.

More specifically, it is possible to measure the flatness (the unevenness of the road surface in the direction of travel), rutting depth, and crack ratio of the road surface 900. Based on the three types of road surface properties, a maintenance control index (MCI) is obtained. The MCI may be obtained by transmitting measurement data to an external device, such as a personal computers (PC) and a tablet terminal, after the measurement. Alternatively, a PC may be mounted on the vehicle 700 so as to obtain the MCI during the measurement that is performed while the vehicle 700 is moving.

The frame 720 is an example of a connecting component disposed between the vehicle 700 and the measuring device body 100, which is used to attach the measuring device body 100 to the back side of the vehicle 700.

The harness 730 is an example of a connecting component disposed between the vehicle 700 and the measuring device body 100. With the harness 730, the stereo camera 130 inside the measuring device body 100 is connected to the PC mounted on the vehicle 700. Accordingly, an image captured by the stereo camera 130 is transmitted to the PC through the harness 730. The harness 730 is attached to the frame 720 with, for example, binding bands, which are spaced apart to some extent. In addition, a part of the harness 730 may be raised from the side surface of the frame 720.

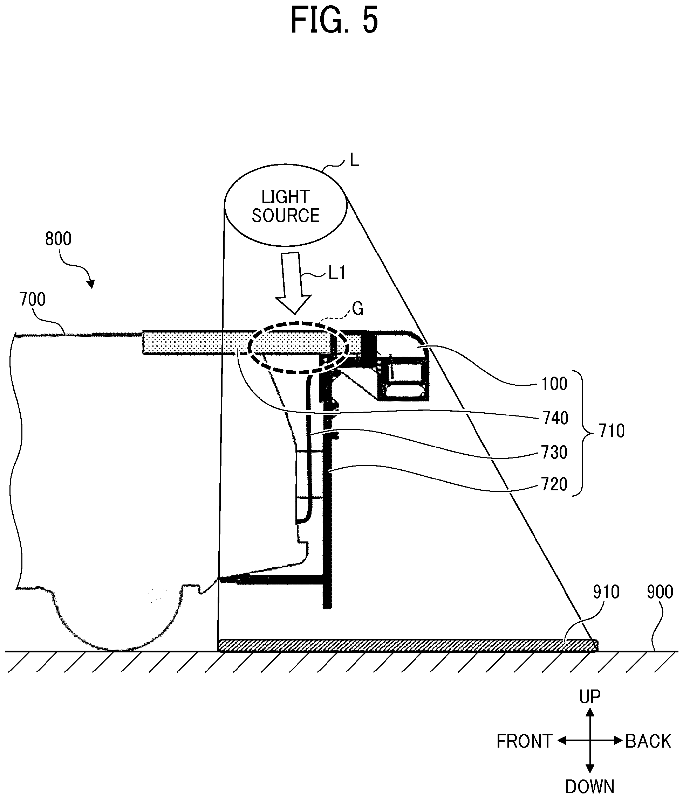

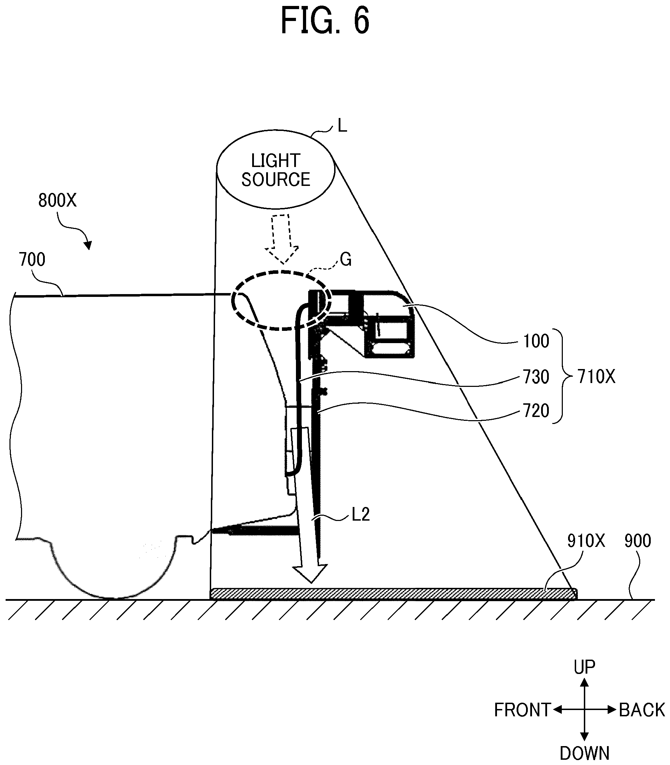

The light-shielding cover 740 is a cover for simplifying the shape of the shadow of the mobile measuring apparatus 800 generated on the road surface 900. In the example of FIG. 1, the light-shielding cover 740 is provided over the upper surfaces of the vehicle 700 and the measuring device body 100. In other words, as viewed from above the mobile measuring apparatus 800, the light-shielding cover 740 is provided as a covering member that covers the gap G (see FIGs. 5 and 6 described later) between the vehicle 700 and the measuring device body 100. This configuration prevents the light from a light source, such as the sun, illumination of a tunnel, and a street light, from passing through the gap G between the vehicle 700 and the measuring device body 100 and reaching the road surface 900 to be measured.

In some alternative arrangements (which are outside the scope of the claims), the frame 720 may be attached to the front side of the vehicle 700. Alternatively, the frame 720 may be attached to the side where the door of the vehicle 700 is attached.

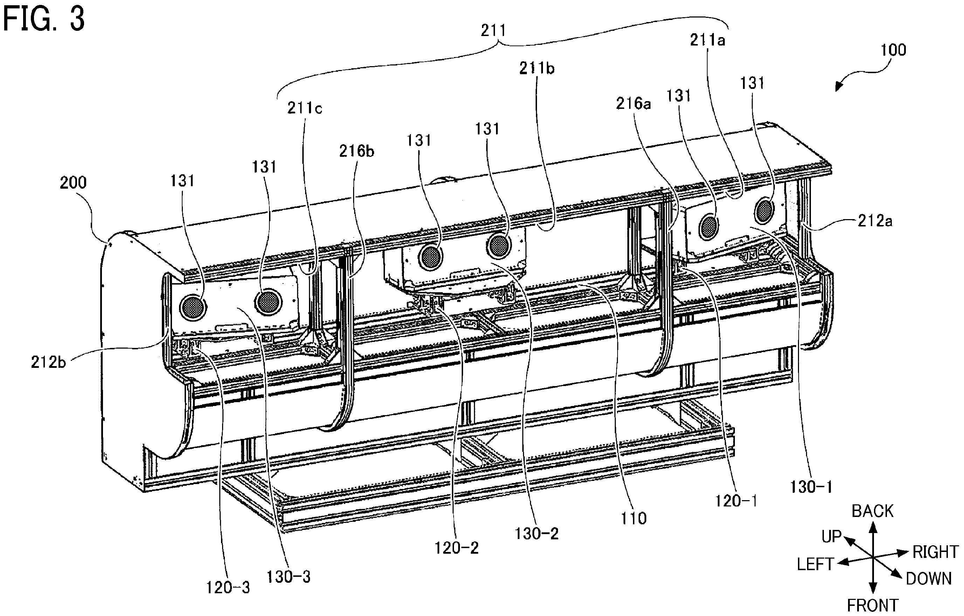

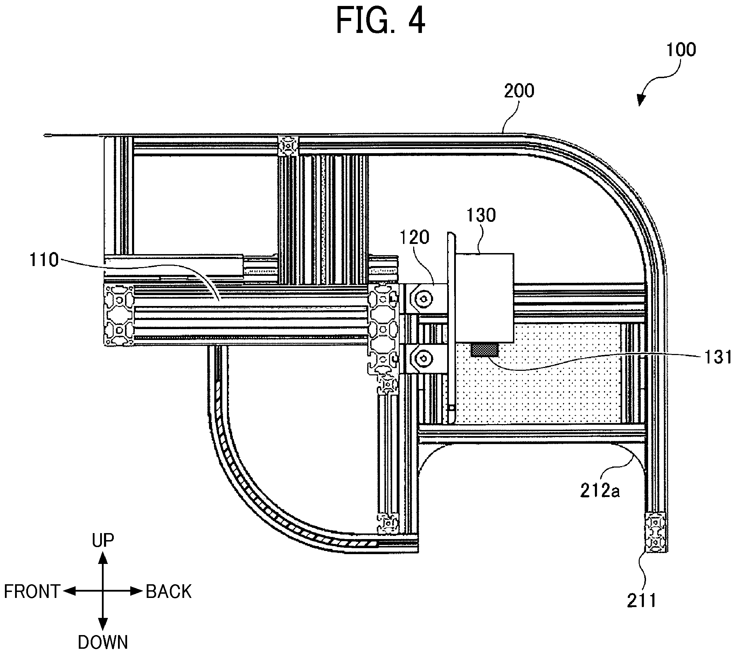

Next, the measuring device body 100 according to an embodiment of the present disclosure is described with reference to FIGs. 3 and 4. FIG. 3 is a perspective view of the measuring device body 100 according to an embodiment of the present disclosure as seen from the lower side. FIG. 4 is a cross-sectional view of the measuring device body 100 according to an embodiment of the present disclosure as seen from the side of the measuring device body 100.

The measuring device body 100 includes a base frame 110, a camera mount 120, the stereo camera 130, and a protective cover unit 200. The measuring device body 100 includes a plurality of stereo cameras 130, which enables acquiring of a wide range of measurement data.

In the example of FIG. 3, the measuring device body 100 includes three stereo cameras 130 (130-1, 130-2, and 130-3) provided with the the camera mounts 120 (120-1, 120-2, 120-2, and 120-3), respectively.

One end of the base frame 110 is attached to the frame 720 (see FIGs. 1A and IB). The camera mount 120 is attached to the other end of the base frame 110. The stereo camera 130 as an image-capturing device is fixed by the camera mount 120. In some embodiments, the camera mount 120 may be provided with an angle adjuster that adjusts an image-capturing angle of the stereo camera 130.

The stereo camera 130 has two lenses 131, and is configured to measure the distance to the measurement target by processing acquired image data. Note that the stereo camera 130 is an example of the image-capturing device of the measuring device body 100, but this is just one example. For example, the image-capturing device may be a monocular camera to check the state of the subject.

Further, the number of image-capturing devices incorporated in the measuring device body 100 is not limited to three, and may be one or more (for example, one, two, four, or more). Incorporating a plurality of image-capturing devices enables the acquiring of a wider range of measurement data. Further, by employing a wide-angle lens with a focal length of 35 millimeters (mm) or less as the lens 131 of the stereo camera 130, a wider range of measurement data can be obtained.

The protective cover unit 200 includes, for example, a resin plate and an aluminum frame supporting the resin plate, and forms a box having openings 211 (211a, 211b, and 211c) on the lower side (that is, the image-capturing side) of the image-capturing device. The stereo camera 130 is disposed in the internal space of the protective cover unit 200. Further, the protective cover unit 200 has a side opening 212a formed at the lower end of the right side, and a side opening 212b is formed at the lower end of the left side.

The opening 211 and the side opening 212a communicate with each other, and the opening 211 and the side opening 212b communicate with each other. As described above, the openings 211, 212a, and 212b forms a single opening that ranges from the lower end of the right side to the lower end of the left side through the lower side of the protective cover unit 200. The protective cover unit 200 further includes frames 216a and 216b, which are disposed at positions that do not interfere with the image-capturing area of the stereo camera 130.

In the example of FIG. 3, the opening 211 at the lower side of the protective cover unit 200 is sectioned by the frames 216a and 216b into three openings 211a, 211b, and 211c. In some examples, the frames 216a and 216b may not be included in the protective cover unit 200.

In some other examples, the protective cover unit 200 may include a protective member that closes the openings 211, 212a, and 212b. By closing the openings 211, 212a and 212b by the protective member, the stereo camera 130 disposed inside can be protected when measurement is not performed.

Next, the mobile measuring apparatus 800 according to an embodiment of the present disclosure is described in comparison with a mobile measuring apparatus 800X according to a comparative example (a reference example). FIG. 5 is an illustration of the shadow caused by the mobile measuring apparatus 800 according to an embodiment of the present disclosure. FIG. 6 is an illustration of the shadow caused by a mobile measuring apparatus 800X according to a comparative example.

The mobile measuring apparatus 800X according to the comparative example in FIG. 6 includes a vehicle 700 and a measuring device 710X. The measuring device 710X includes a frame 720 attached to the vehicle 700, a measuring device body 100 attached to the vehicle 700 with the frame 720 therebetween, and a harness 730 connected to the measuring device body 100. That is, the measuring device 710X according to the comparative example differs from the measuring device 710 according to the present embodiment in that the light-shielding cover 740 is not included in the measuring device 710X according to the comparative example. The other configuration is the same as that of the measuring device 710 according to the present embodiment, and the overlapping description is omitted.

As illustrated in FIG. 6, in the mobile measuring apparatus 800X according to the comparative example, the light indicated by arrow L1 from the light source L such as the sun, the illumination in the tunnel, and a street light passes through the space G between the vehicle 700 and the measuring device body 100, and reaches the road surface 900 to be measured, as indicated by arrow L2. The light passing through the gap G generates various shadows 910X of complicated shapes of the backside of the vehicle 700, the measuring device body 100, the frame 720, and the harness 730, on the road surface 900. With the generated shadows 910X of the complicated shapes, a lot of boundaries between shadows (shadow areas) and non-shadows (non-shadow areas) appear in the captured image of the measuring device 710X.

By contrast, in the mobile measuring apparatus 800 according to an embodiment of the present disclosure illustrated in FIG. 5, light indicated by arrow L1 from a light source L, such as the sun, the illumination in the tunnel, and a street light, is blocked by the light-shielding cover 740 from passing through the gap G between the vehicle 700 and the measuring device body 100. This configuration prevents the generation of various shadows of the complicated shapes of the backside of the vehicle 700, the measuring device body 100, the frame 720, and the harness 730, which occurs in the comparative example. Thus, a cluster of shadows is generated on the road surface 900 due to the light-shielding cover 740. In other words, a shadow 910 of a simplified shape is formed on the road surface 900. With such a shadow 910 of a simplified shape, less boudaries between the shadow areas and the non-shadow areas appear in the captured image of the measuring device 710, than in the comparative example.

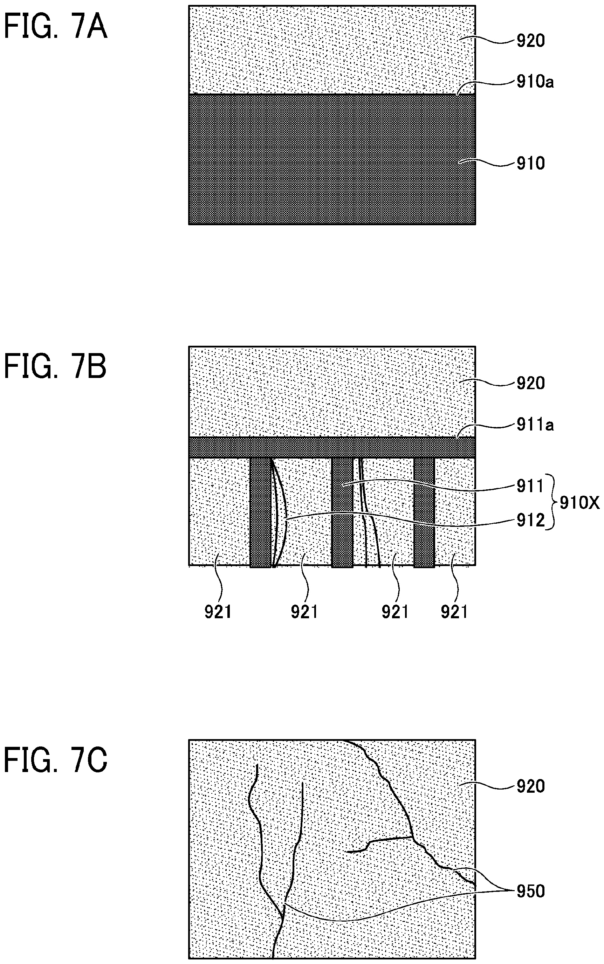

FIGs. 7A, 7B, and 7C are illustrations for comparing an example of the captured image between the mobile measuring apparatus 800 according to an embodiment of the present disclosure, and the mobile measuring apparatus 800X according to the comparative example. FIG. 7A is an example of the captured image of the mobile measuring apparatus 800 according to an embodiment of the present disclosure. FIG. 7B is an example of the captured image of the mobile measuring apparatus 800X according to the comparative example. FIG. 7C is an example of the captured image of the mobile measuring apparatus when there is a crack on the road surface 900. In the case of FIG. 7C, it is assumed that the shadow of the mobile measuring apparatus is not generated within the image-capturing area of the captured image.

In the captured image of the mobile measuring apparatus according to the comparative example illustrated in FIG. 7B, the shadow 910X includes a shadow 911 of the frame 720 and a shadow 912 of the harness 730. Further, non-shadow areas 920 and 921 are formed in the captured image due to the shadow 911 of the frame 720 between the non-shadow areas 920 and 921. For this reason, the shape of the shadow 910X becomes complicated, and a lot of boundaries between the shadow area (the shadow 910X) and the non-shadow areas 920 and 921 appear in the captured image of the mobile measuring apparatus 800X according to the comparative example.

Referring to FIG. 7C, if a thin line 950 is detected by the image processing during the process of determining damage on the road surface from the captured image, the thin line 950 is determined as a crack in the road surface 900.

In the case of the mobile measuring apparatus 800X according to the comparative example in FIG. 7B, the boundary 911a of the shadow 911 of the frame 720 and the shadow 912 of the harness 730 might be erroneously determined as cracks in the road surface 900. The position and the shape of the shadow 910X are variable with the relative positions of the light source L and the mobile measuring apparatus 800. Further, the position and the shape of the shadow 912 of the harness 730 are variable with, for example, the vibration due to the movement of the vehicle 700. For this reason, the shape of the shadow 910X appears irregularly in the captured image.

By contrast, in the case of the captured image according to an embodiment of the present disclosure illustrated in FIG. 7A, the shadow 910 is a shadow of the light-shielding cover 740. Further, by blocking the light from passing through the gap G, the non-shadow area 920 is not separated from another non-shadow area (for example, the non-shadow area 921). As a result, the shape of the shadow 910X is simplified as compared to the shadow according to the comparative example, and there is no boundary between the shadow area (the shadow 910) and the non-shadow area 920 in the captured image according to the embodiments of the present disclosure. Thus, the configuration according to the embodiments of the present disclosure can substantially avoid the erroneous determination of damage on the road surface from the captured image by the process of determining damage. That is, the mobile measuring apparatus 800 according to the embodiments of the present disclosure can substantially avoid the erroneous determination of damage on the road surface from the captured image by the process of determining damage, thus measuring the measurement target (the road surface 900) successfully.

Note that simplifying the shape of the shadow refers to, for example, reducing the number of boundaries between the shadow area and the non-shadow area in the image-capturing area of the captured image, reducing the length of the boundary (line), making the shape of the boundary linear or circular, or reducing the number of independent non-shadow areas separate from the shadow area.

The present disclosure is not limited to the above-described embodiments of the mobile measuring apparatus 800, and various other embodiments may be used within the scope of the appended claims.

In the above description, the light-shielding cover 740 of the mobile measuring apparatus 800 blocks the optical path of light from the light source L to the intermediate section (the frame 720 and the harness 730), i.e., blocks the light from the light source L from passing through the intermediate section (the frames 720 and the harness 730) and reaching the road surface 900. However, this is only one example. For example, the light-shielding cover 740 may be disposed to block the optical path between the intermediate section and the road surface 900.

Numerous additional modifications and variations are possible in light of the above teachings. It is therefore to be understood that within the scope of the appended claims, the embodiments may be practiced otherwise than as specifically described herein. For example, elements and/or features of different illustrative embodiments may be combined with each other and/or substituted for each other within the scope of this disclosure and appended claims.

## Claims

1. A mobile measuring apparatus (800) comprising:
a mobile object (700); and
a measuring device (710) mounted on the back side of the mobile object, the measuring device (710) comprising a light shield (740) and a measuring device body (100), wherein the measuring device body (100) is provided with an image-capturing device (130) configured to capture an image of a road surface (900) in order to measure road surface conditions, wherein
the light shield (740) is disposed over an upper surface of the mobile object and an upper surface of the measuring device body (100) and covers the gap between the mobile object and the measuring device body, as viewed from above the mobile measuring apparatus, and
the light shield (740) is configured to block light from a light source from passing through the gap between the mobile object (700) and the measuring device body (100), so as to prevent a shadow of the measuring device body with a complicated shape from being generated on the road surface by light from the light source and from appearing in the captured image, thereby forming a shadow of a simplified shape on the road surface, which appears in the captured image.

2. The mobile measuring apparatus (800) according to claim 1,
wherein the measuring device (710) further includes a connection section (720 and 230) disposed between the measuring device body (100) and the mobile object (700).

3. The mobile measuring apparatus (800) according to claim 2,
wherein the light shield (740) is configured to block the light to prevent a generation of a shadow of the connection section on the measurement target.

4. The mobile measuring apparatus (800) according to one of claims 1 to 3, wherein the mobile object (700) is a vehicle.

## Patentansprüche

1. Mobile Messvorrichtung (800), die Folgendes umfasst:
ein mobiles Objekt (700); und
eine Messvorrichtung (710), die an der Rückseite des mobilen Objekts angebracht ist, wobei die Messvorrichtung (710) eine Lichtabschirmung (740) und einen Messvorrichtungskörper (100) umfasst, wobei der Messvorrichtungskörper (100) mit einer Bilderfassungsvorrichtung (130) versehen ist, die dafür konfiguriert ist, ein Bild einer Straßenoberfläche (900) zu erfassen, um Straßenoberflächenbedingungen zu messen, wobei
die Lichtabschirmung (740) über einer oberen Fläche des mobilen Objekts und einer oberen Fläche des Messvorrichtungskörpers (100) angeordnet ist und den Spalt zwischen dem mobilen Objekt und dem Messvorrichtungskörper abdeckt, gesehen von oberhalb der mobilen Messvorrichtung, und
die Lichtabschirmung (740) dafür konfiguriert ist, Licht von einer Lichtquelle daran zu hindern, durch den Spalt zwischen dem mobilen Objekt (700) und dem Messvorrichtungskörper (100) zu gelangen, um zu verhindern, dass ein Schatten des Messvorrichtungskörpers mit einer komplizierten Form auf der Straßenoberfläche durch Licht von der Lichtquelle erzeugt wird und in dem aufgenommenen Bild erscheint, wodurch ein Schatten mit einer vereinfachten Form auf der Straßenoberfläche gebildet wird, der in dem aufgenommenen Bild erscheint.

2. Mobile Messvorrichtung (800) nach Anspruch 1,
wobei die Messvorrichtung (710) ferner einen Verbindungsabschnitt (720 und 230) umfasst, der zwischen dem Messvorrichtungskörper (100) und dem mobilen Objekt (700) angeordnet ist.

3. Mobile Messvorrichtung (800) nach Anspruch 2,
wobei die Lichtabschirmung (740) dafür konfiguriert ist, das Licht zu blockieren, um die Erzeugung eines Schattens des Verbindungsabschnitts auf dem Messobjekt zu verhindern.

4. Mobile Messvorrichtung (800) nach einem der Ansprüche 1 bis 3,
wobei das mobile Objekt (700) ein Fahrzeug ist.

## Revendications

1. Appareil de mesure mobile (800) comprenant :
un objet mobile (700) ; et
un dispositif de mesure (710) monté sur le côté arrière de l'objet mobile, le dispositif de mesure (710) comprenant un pare-lumière (740) et un corps de dispositif de mesure (100), dans lequel le corps de dispositif de mesure (100) est pourvu d'un dispositif de capture d'image (130) configuré pour capturer une image d'une surface de route (900) afin de mesurer des conditions de surface de la route, dans lequel
le pare-lumière (740) est disposé sur une surface supérieure de l'objet mobile et une surface supérieure du corps de dispositif de mesure (100) et recouvre l'espace entre l'objet mobile et le corps de dispositif de mesure, vu de dessus l'appareil de mesure mobile, et
le pare-lumière (740) est configuré pour empêcher la lumière provenant d'une source lumineuse de traverser l'espace entre l'objet mobile (700) et le corps de dispositif de mesure (100), de manière à empêcher qu'une ombre du corps de dispositif de mesure avec une forme compliquée ne soit générée sur la surface de la route par la lumière provenant de la source lumineuse et
n'apparaisse dans l'image capturée, formant ainsi une ombre d'une forme simplifiée sur la surface de la route, qui apparaît sur l'image capturée.

2. Appareil de mesure mobile (800) selon la revendication 1,
dans lequel le dispositif de mesure (710) comprend en outre une section de connexion (720 et 230) disposée entre le corps de dispositif de mesure (100) et l'objet mobile (700).

3. Appareil de mesure mobile (800) selon la revendication 2,
dans lequel le pare-lumière (740) est configuré pour bloquer la lumière pour empêcher une génération d'une ombre de la section de connexion sur la cible de mesure.

4. Appareil de mesure mobile (800) selon l'une des revendications 1 à 3,
dans lequel l'objet mobile (700) est un véhicule.
